# EUROPEAN PATENT APPLICATION

(11) **EP 4 475 034 A1**
(43) Date of publication of application: **11.12.2024**
(21) Application number: 23305909.6
(22) Date of filing: 07.06.2023
(51) Int. Cl.: G06K 19/07

(54) **SENSOR TAG AND STORING CONTAINER WITH SUCH A SENSOR TAG**

(71) Applicant: Linxens Holding, 78200 Mantes-la-Jolie (FR)
(72) Inventor: Burghart, Markus, 01099 Dresden (DE)
(74) Representative: Grünecker Patent- und Rechtsanwälte PartG mbB

(57) **Abstract**

In various aspects, a sensor tag and a storing container with such a sensor tag are provided. In illustrative embodiments, the sensor tag comprises a flexible base substrate, an antenna pattern formed on a first side of the flexible base substrate, and a sensor device arranged on a second side of the flexible base substrate. The sensor device is configured to sense at least one physical quantity. The antenna pattern and the sensor device are electrically connected.

## Description

### Field of the Invention

The present invention relates to a sensor tag and to a storing container with such a sensor tag.

### State of the Art

In recent years, as information management systems become increasingly digitalized and interactive, stored goods are equipped with tags storing information for easily identified and tracking the tagged stored good upon reading the information on the tag of the stored good, e.g., with an appropriate reading device. Typically, RFID (Radio Frequency Identification) systems in communication with an RFID tag attached to a stored good are used to retrieve information regarding the stored good in a non-contact manner by communicating with the RFID tag via RFID tag means. Conventionally, an RFID tag includes an RFIC element configured to store predetermined information and process an RF signal and an antenna element configured to transmit and receive the RF signal.

Document WO 2018/101379 A1 shows a main body of the shape of a bag having an RFID tag provided on the main body and including an RFIC element and an antenna pattern.

In document KR 2013-0013731, an RFID tag for a breakoff antenna is provided to automatically break an RFID antenna by breaking a break-off cutting unit of the RFID tag attached to a box or a container. Herein, a bent or cut neck is formed at the center of an upper and a lower tag body. A break-off cutting unit is formed at an upper end of the lower tag body. A break-off ring is formed at the center of the lower tag body. The break-off cutting unit is broken by pulling or pushing the break-off ring. An RFID antenna is installed from an RFID chipset to the lower tag body. A range of the RFID antenna is extended from the RFID chipset to the lower tag body through the bent or cut neck and the break-off cutting unit.

However, known RFID tags only allow retrieving the information stored on the tag, while the state or condition of stored goods is not accessible by the tag.

It is an object to monitor the condition of stored goods in addition to providing logistic information of stored goods without requiring excessive technology in addition to known RFID tags.

### Summary

The above object is solved in a first aspect of the present disclosure by a sensor tag comprising a flexible base substrate, an antenna pattern formed on a first side of the flexible base substrate, and a sensor device arranged on a second side of the flexible base substrate. The sensor device is configured to sense at least one physical quantity. The antenna pattern and the sensor device are electrically connected. Accordingly, it is possible to monitor the state or condition of a stored good equipped with a sensor tag via the sensor device of the sensor tag. In some advantageous embodiments, the reading of information on the at least one monitored physical quantity may be performed with a reading device that adapted to communicate with the antenna pattern, e.g., a smartphone. For example, the sensor device may comprise a memory in which information for identifying and/or tracking a good tagged with the sensor tag is stored. In some illustrative examples herein, the antenna pattern and the sensor device may be connected by an electrically conductive interconnection extending between the antenna pattern and the sensor device. The antenna pattern may be coupled to the electrically conductive interconnection by means of a bridging portion which possibly extends over a winding track line of the antenna pattern, wherein an insulating capping layer is formed between the winding track line and the electrically conductive interconnection (in case that the antenna pattern and electrically conductive interconnection are arranged on the same side of the flexible substrate), or a bridging portion formed on an opposite side of the flexible base substrate, the bridging portion being connected to the wiring track line and the electrically conductive interconnection by means of vertical interconnection elements (e.g., vertical interconnections possible being filled or edge planted or crimped) extending along a thickness direction of the flexible base substrate perpendicular to length and width directions of the flexible base substrate. For example, the bridging portion may be laminated or printed or crimped.

Herein, a flexible base substrate is a thin, heat-resistant material that may be made of polymers like polyimide and polyethylene terephthalate (PET). In some illustrative embodiments of various aspects disclosed herein, a flexible base substrate may be provided as functional substrates of flexible thin-film printed circuit board (PCB) type.

The antenna pattern may be formed on the flexible base substrate as a wiring pattern formed by blanket deposition of a conductive material on at least one surface of the flexible base substrate, followed by a patterning of the deposited conductive material, e.g., by etching, laser patterning and the like, to produce a desired wiring pattern with winding track lines forming a winding pattern of the antenna pattern and/or connecting track lines of the electrically conductive interconnection. In laser patterning, for example, sections of a conductive layer are removed to create a wiring pattern for electrical circuits on the flexible base substrate. Compared to photolithography, laser patterning allows more flexibility in customizing for specific applications and reduces the need for consumable materials during the circuit board production process. Preventing disruption to the substrate is a challenge in laser patterning, but using methods like front and back processing can reduce the risk. Alternatively, the conductive material may be printed onto at least one surface of the flexible base substrate in form a desired wiring pattern. For example, the conductive material may be at least one of aluminum, silver, gold, copper, indium tin oxide, and carbon, while substrate materials for providing the flexible base substrate or a rigid base substrate, if desired, may for example comprise at least one of quartz, glass, ceramic, organic materials, a thermoplastic material, PI, PET, PEEK, and FR-4 without limitation. In some examples, a style of PCB known as "rigid-flex" PCB, incorporating flexible and inflexible circuits to create a hybrid design solution may be provided in a modification for replacing the flexible base substrate by a rigid-flex base substrate.

In some illustrative embodiments of the first aspect, the flexible base substrate may have at least one bending line or folding line in a first portion of the flexible base substrate extending completely between a second portion of a flexible base substrate in which the antenna pattern is completely formed and a third portion of the flexible base substrate in which the sensor device is completely arranged. Accordingly, the sensor tag may be folded or bent along the bending line without deteriorating the integrity of the sensor tag to obtain the sensor tag in a desired three-dimensional shape. For example, the sensor tag may be attached to a three-dimensional surface having edges and/or corners in alignment with the at least one bending line. Herein, a bending line or folding line represents a line along which the sensor tag may be bent or folded. In some illustrative examples herein, there may be conductive track lines routed in the first portion and the conductive track lines routed in the first portion may have bending material portions provided at least at the at least one bending line, the bending material portions having a higher elasticity than the antenna pattern. That is, the bending material portions are located within the first portion of the flexible base substrate, at least in a region of the sensor tag in which a bending line is completely formed. Accordingly, the integrity of the sensor tag throughout repeated bending or folding of the sensor tag may be maintained by the bending material portions. A suitable design of bending material portions may allow more safety margin regarding bending along small radii.

In some specific examples herein, at least one bending material portion may be provided by a strip of material having a higher elasticity than the material of a conductive material forming conductive track lines connecting to the antenna pattern and the sensor device or a conductive track line routed within the first region may be at least partially formed by a material of higher elasticity than material of track lines routed outside of the first region. In a special but non-limiting example of a conductive track line representing a bending material portion, the conductive track line of the bending material portion may be formed of copper, while conductive track lines outside of the bending material portion may be formed of aluminum.

In some other specific examples herein, the conductive material may be provided in a strip shape having a greater width than a width of conductive track lines routed in the first portion to electrically connect to the antenna pattern and the sensor device.

In some other specific examples herein, bending material portions may be provided by conductive track lines formed of wire material identical to the wire material of the antenna pattern and an electrical connecting wire connecting the bending material portion with the sensor device, the electrical wire material of the bending material portion being embedded into a material of higher elasticity than the material of the electrical wire.

In some other specific examples herein, the bending material portion may be provided by electrical wire track lines integrally formed with electrical wires forming the antenna pattern and connecting the bending material portion to the sensor device, the wire lines in the bending material portion being provided in a meander-like pattern or in general in a pattern in which a conductive track line crossing a bending line or holding line in the first portion is oriented with an angle different from 90 degrees with respect to the folding line or bending line. In a special but non-limiting example, the conductive track line may be provided by a wire routed in a meander or sinusoidal or curved shape.

In some other illustrative embodiments of the first aspect, the first and second sides of the flexible base substrate may identify the same side of the flexible base substrate and an adhesive film may be provided on at least a portion of the third side opposite the first side. Accordingly the sensor tag may be easily attached to a good without exposing the antenna pattern and/or the sensor device to possible damage.

In some other illustrative embodiments of the first aspect, the first and second sides of the flexible base substrate may identify opposite sides of the substrate and the flexible base substrate may further comprise via connections extending through the flexible base substrate extending through the flexible base substrate between the first and second sides. Accordingly, the antenna pattern formed on the first side and the sensor device formed on the second side may be easily connected via the via connections. In some explicit examples herein, an adhesive film may be provided on a portion of the second side outside a surface portion of the flexible base substrate in which the sensor device is formed or the second side may be covered by a bottom layer and an adhesive layer is formed on a bottom surface of the bottom layer. Accordingly, mechanical contact of the adhesive film and the sensor device is avoided.

In some other illustrative embodiments, the sensor device may comprise a chip module. The chip module may be configured to sense temperature among other possible physical quantities. Accordingly, a monitoring of temperature of a good (among other possible physical quantities) may be easily achieved via the sensor tag. Additionally or alternatively, the sensor device may at least comprise or be implemented by an electronic circuit formed in or integrated into the flexible base substrate, the electronic circuit realizing a sensing function for sensing at least one physical quantity and/or operating the antenna pattern for allowing communication with an external reading device via the antenna pattern.

In some illustrative examples herein, the sensor device may comprise at least one additional sensor element in an electronic connection with the chip module. Accordingly, further physical quantities may be monitored in addition to temperature. In some more specific examples herein, the at least one additional sensor element may comprise at least one of a photo detector, an acceleration sensor, and a humidity sensor. Accordingly, exposure of a good, to which the sensor tag is attached to electromagnetic radiation, mechanical vibration and humidity may be monitored easily. In some more advantageous examples herein, a power source coupled to the sensor tag or integrated into the sensor tag, e.g., a battery, may be considered to allow for logging of data instead of only performing measurements during a reading communication subjected to the sensor tag via an external reading device.

In some other illustrative embodiments, the at least one physical quantity may comprise at least one of temperature, humidity, light intensity and acceleration. Accordingly, exposure of the sensor tag to temperature, humidity, electromagnetic radiation and acceleration may be monitored.

In some specific examples herein, the sensor tag may further comprise a solar cell module in electric connection with a chip module. Accordingly, the solar cell module may implement a power source for the chip module. Alternatively, the solar cell module may be used instead of a photodetector. For example, the solar cell module may be configured to power the chip module with electrical power and/or the chip module may be configured to at least one of generating an event signal, storing event information and outputting a notification signal of the antenna pattern on the basis of electrical power received from the solar cell module. In this respect, the solar cell module represents an electrical power source and/or may implement a sensor for sensing exposure of the sensor tag to electromagnetic radiation and logging exposure to electromagnetic radiation as well as responding to exposure to electromagnetic radiation.

In some more specific examples herein, the chip module may be configured to activate a deactivation signal within a chip module for temporarily or permanently deactivating the chip module in response to electrical power received from the solar cell module. Accordingly, the chip module may be deactivated, e.g., exposure to electromagnetic radiation may trigger the solar cell module to issue a "chip kill" signal, i.e., a signal for permanently deactivating the chip module in response to electrical power generated by the solar cell and output to the chip module from the solar cell module. That is, an one-time sensor for detecting exposure to electromagnetic radiation may be implemented in that a non-active sensor tag may indicate exposure to electromagnetic radiation thereby indicating that a good equipped with the sensor tag may be undesirably exposed to electromagnetic radiation. In other cases, a temporary deactivation of the sensor tag may indicate a temporary non-availability of a good equipped with the sensor tag due to a temporary exposure to electromagnetic radiation.

In some other illustrative embodiments of the first aspect, the flexible base substrate may be provided in the shape of a strip substrate having a first end and a second end opposite the first end along a length direction of the strip substrate, the antenna pattern being formed at the first end and the sensor device being formed at the second end. A strip substrate may be understood as indicating a substrate in a strip shape where a length dimension of the substrate (substantially corresponding to a direction in which the sensor device and the antenna pattern are separated) is greater than a width dimension substantially perpendicular to the length dimension in a surface on which the antenna pattern and/or the sensor device are formed. For example, a ratio of the length dimension to the width dimension may be at least 2 or at least 5 or at least 10. Herein, the antenna pattern and the sensor device are arranged at opposite ends of the sensor tag which is implemented as a strip substrate. In this way, the sensor device and the antenna pattern may be spatially arranged at remote locations for separating the location of detecting a physical quantity via the sensor device and communicating information to a reading device via the antenna pattern. In some illustrative examples, the spatial separation between antenna pattern and sensor device may avoid interference between antenna pattern and sensor device. In particular, the location of monitoring a physical quantity via the sensor device in a location of communicating with an external reading device may be spatially decoupled.

The above object is solved in a second aspect of the present disclosure by a storing container. In illustrative embodiments of the second aspect, the storing container encases a storing volume, the storing volume being accessible via a closable opening. The storing container further comprises the sensor tag of the first aspect, wherein the sensor tag is arranged on the storing container such that at least the sensor device is exposed to the storing volume of the storing container. Accordingly, the storing volume of the storing container may be monitored via the sensor device.

In some illustrative embodiments of the second aspect, the sensor tag may be arranged completely within the storing volume and the storing container further comprises a booster antenna pattern arranged on an outer surface of a sidewall of the storing container opposite an internal surface of the sidewall of the storing container, substantially in alignment with the antenna pattern of the sensor tag. The booster antenna is adapted to receive and emit electromagnetic radiation of the sensor tag, the resonance frequency of the booster antenna. Accordingly, the booster antenna may allow accessing the sensor tag at the location within the storing container where external electromagnetic radiation emitted by a reading device for communication with the sensor device is deteriorated by the storing container. In some illustrative examples, the booster antenna may be arranged on the flexible base substrate of the sensor tag at the remote position of both of the sensor devices and the antenna pattern. In other illustrative examples herein, the booster antenna may be provided on a separate substrate mounted outside on the storing container in addition to the sensor tag being completely arranged within the storing volume. In some modification herein, the flexible base substrate may be replaced by a base substrate not limited to a flexible substrate, e.g., a rigid substrate.

In some other illustrative embodiments of the second aspect, the sensor tag may be arranged on the storing container such that the antenna pattern of the sensor tag may be exposed to an outer environment of the storing container. Accordingly, the storing volume of the storing container is monitored by the sensor device, while the antenna pattern is located outside of the storing container, the flexible base substrate of the sensor tag extending from the storing volume of the storing container towards the outside surface of the storing container. In this way, the antenna pattern is easily accessible with a reading device, e.g., a smartphone.

In some special illustrative examples herein, the sensor tag may extend from outside of the storing container into the storing volume of the storing container through the closable opening.

In some other illustrative embodiments of the second aspect, the sensor tag may be arranged completely within the storing volume and the sensor tag may further comprise a power source for supplying electric power to the sensor device. The power source may be appropriate for supplying enough power to the sensor tag such that the sensor tag is able to communicate with a reading device located outside of the storing container. In some modification herein, the flexible base substrate may be replaced by a base substrate not limited to a flexible substrate, e.g., a rigid base substrate.

In some other illustrative embodiments of the second aspect, the storing container may be a thermal insulation box, for example, a thermal insulation box of Styrofoam, or a container which is at least partially formed of a metal. Such a storing container is particularly advantageous in medical applications where a physical quantity of medical goods stored within the storing volume of the storing container is to be monitored and the state is to be accessed via an external reading device, e.g., a smartphone. In some illustrative examples herein, container walls of the storing container enclosing the storing volume may have a minimum thickness of 30 mm, e.g., a thickness in a range from about 35 mm to about 100 mm. In some illustrative examples herein, the sensor tag may comprise a ferrite material at least covering a surface portion of the flexible substrate at the antenna pattern. In other words, a surface of the flexible substrate on which the antenna pattern is formed, may be at least partially comprise a surface region which comprises a ferrite material such that the antenna pattern is formed on a material portion of the flexible base substrate comprising a ferrite material.

In the various aspects and illustrative embodiments described above, a sensor tag is disclosed, allowing a reading of actual physical conditions at a good equipped with the sensor tag, for example, an environment condition provided within an enclosure without directly accessing the enclosure or accessing the good. In this way, an integrated sensor device can be placed within an encasing of a storage container to monitor interior conditions of the storing container, whilst placing a communication antenna outside of the storing container to enable performant reading of data by NFC without having to access the interior of the storing container, in particular, opening the storage container.

In some illustrative embodiments of the present disclosure, smart sensing systems are provided in the form of on chip sensors like temperature sensors, or other sensors implemented as systems on a chip. Placing a tag with such a chip in the form of a sensor tag of the first aspect into a storage container overcomes the issue of a limited reading range due to insulation material present between the sensor tag mounted within, and enclosed storing volume and an external reading device. In various embodiments of the present disclosure, a reading range of a sensor tag placed at least partially within a storage volume of a storage container is provided by either sophisticated designs of antennas and multi component set ups, or an appropriate scaling of the sensor tag allowing a sufficient spatial separation of a sensor device mounted to the sensor tag and an antenna pattern provided on the sensor tag. In some illustrative embodiments, an elongated design is used for placing a sensor device at one side and an antenna pattern on the other side, thereby allowing to wrap / stick the sensor tag around edges and places sensor devices at a first position while placing antenna patterns at a remote second position without the risk of interfering performance of either the antenna pattern and a sensor device by entangled positioning of these elements. In this way, a cost effective manufacturing of a smart sensing tag based on NFC with good performance may be achieved.

In the various illustrative embodiments described above, the sensor tag may be understood as a label of an elongated shape where an antenna is placed on one end of the label and an RFID chip (including at least one sensor, e.g., a temperature sensor) is placed at the other end. Conductor lines interconnecting the RFID chip and/or forming the antenna are designed in a way to be flexible and reliable at least in a bending area for bending the label to attach the label at corners of an item to be labelled, e.g., at corners or edges of a box such as an edge between upper and lower parts of a box to be labelled and the RFID chip is located within the box and the antenna is located outside of the box. The RFID chip may have two detectable possibilities of powering (RF and battery), wherein battery pins are connected to a photovoltaic cell. Accordingly, when exposing the item to light, e.g., opening the box, the RFID chip is powered by the photovoltaic cell and a tamper may be detected, thereby realizing a tamperproof feature.

In some of the above described embodiments, the sensor tag is provided as an elongated tag where an RFID chip and an antenna are placed at the opposite sides of the tag. A sensor functionality of the chip and possible additional sensors may be placed at an item to be monitored at different locations on the item, e.g., within the box to measure at least one physical quantity within the box and outside of the box to expose the antenna to the ambient environment of the box. The tag may have a bending area which is designed in a way to improve strain resistance against strain coming from bending over the edge of the box. The antenna is exposed to an ambient environment of an item to be labelled, e.g., outside a box, for stable reading performance. In examples herein, battery pins may be used to implement a tamper proof feature when employing a photovoltaic cell as described in the context of several illustrative embodiment herein.

### Brief Description of the Drawings

Various illustrative embodiments and other advantages of the various aspects of the present disclosure will become apparent from the detailed description of the accompanying drawn
Figures as presented below.
Figure 1 schematically shows, in a top view, a sensor tag in accordance with some illustrative embodiments of the present disclosure.
Figure 1a schematically shows, in a cross-sectional view along line 1a -1a in Figure 1, a sensor tag in accordance with some illustrative embodiments of the present disclosure.
Figure 2 schematically shows in a top view a sensor tag in accordance with some other illustrative embodiments of the present disclosure.
Figures 3 and 4 schematically show cross-sectional views along line 2-2 in Figure 2 in accordance with different embodiments of the present disclosure.
Figure 5 schematically shows a sensor device in accordance with some illustrative embodiments of the present disclosure.
Figures 6a to 6d schematically show sensor tags in accordance with different, alternative embodiments of the present disclosure.
Figures 7 to 9 schematically show in cross sectional view, storage containers in accordance with different, alternative embodiments of the present disclosure.
Figure 10 schematically shows, in a cross-sectional view, a substrate in accordance with some other illustrative embodiments of the present disclosure.

The Figures accompanying the present disclosure are only provided for schematically showing some concepts and aspects of the present disclosure without showing all possible details of certain embodiments and without necessarily being to scale.

### Detailed Description

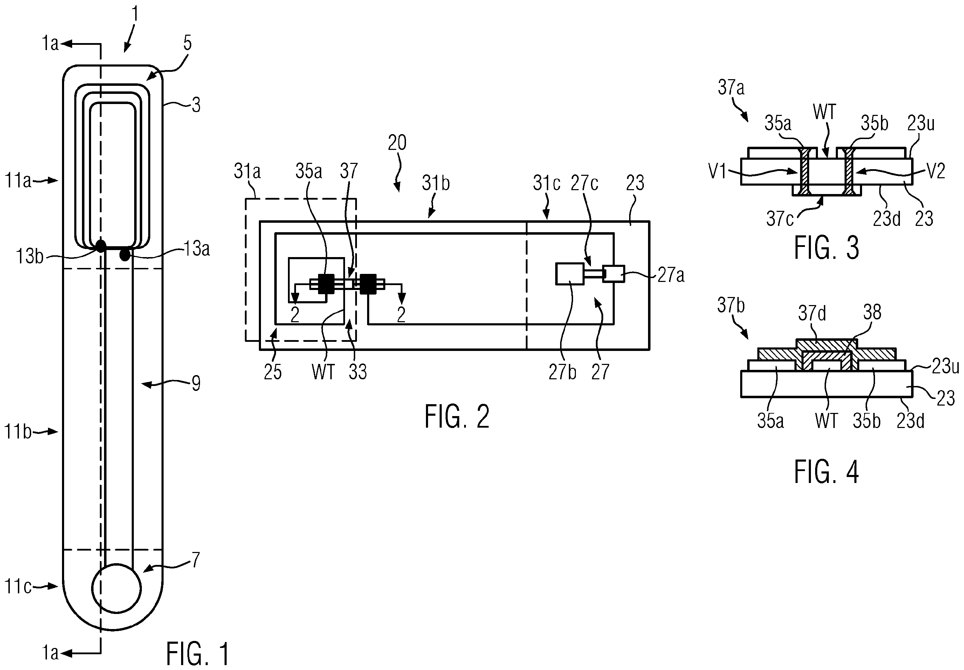

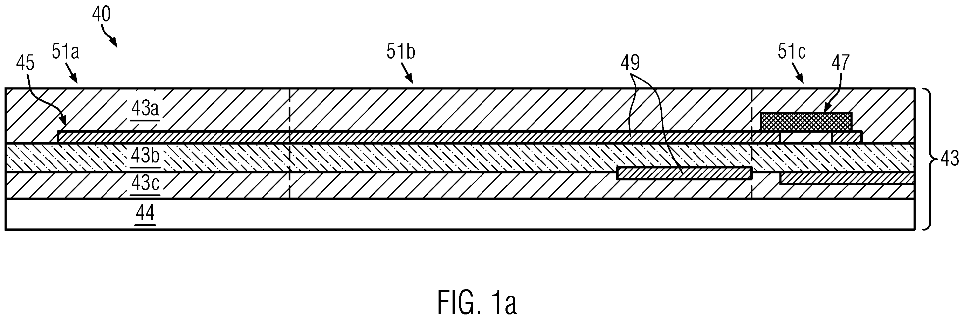

Referring to Figure 1, a sensor tag 1 is schematically illustrated in a top view in accordance with some illustrative embodiments of the present disclosure. The sensor tag 1 comprises a flexible base substrate 3, an antenna pattern 5 implementing a function of an antenna and a sensor device 7 implementing a function of at least a sensor for measuring at least one physical quantity and a function of an RFID chip. Herein, the sensor device 7 is configured to sense at least one physical quantity and the sensor device 7 is configured to communication with an external reading device (not illustrated) via the antenna pattern 5. The sensor device 7 and the antenna pattern 5 are electrically connected by an electrically conductive interconnection, e.g., at least one interconnection line, extending between the antenna pattern 5 and the sensor device 7.

In some illustrative embodiments, the antenna pattern 5 is, for example, implemented as an RF antenna, preferably an UHF antenna pattern. As illustrated in Figure 1, the antenna pattern may be provided in form of a planar antenna pattern but this does not pose any limitation of the present invention and the antenna pattern may be implemented by a non-planar coil instead.

With ongoing reference to Figure 1, the flexible space substrate may be provided in the shape of a strip substrate having a first end with a first end region 11a, a second end opposite the first end with a second end region 11c, and an intermediate portion 11b extending between the first end region 11a and the second end region 11c. The antenna pattern 5 is completely formed within the end region 11a, while the sensor device 7 is completely formed within the end region 11c. The intermediate region 11b only comprises the electrically conductive interconnection 9 extending therein substantially towards the end region 11a and towards the end region 11c, thereby coupling the sensor device 7 located in the end region 11c with the antenna pattern 5 located in the spatially remote or separated end region 11a. At antenna terminals 13a and 13b, the antenna pattern 5 is electrically coupled with the electrically conductive interconnection 9.

In accordance with some illustrative embodiments of the present disclosure, the sensor device 7 may comprise a chip module configured to sense at least one physical quantity or the sensor device 7 may be implemented as a system-on-a-chip (SoC) as an integrated function of the SoC aside from an RFID function for operating the antenna pattern 5. For example, the chip module may further comprise an electronic circuit configured to act as an RFID transponder in connection with the antenna pattern 5. Accordingly, information provided by the sensor device 7 may be communicated with a reading device (not illustrated) adapted to communicate with the antenna pattern 5.

In some special illustrative examples, the sensor device 7 may be configured to sense one or more physical quantities, such as temperature and/or humidity and/or light intensity and/or acceleration or vibration. Accordingly, the sensor device 7 may comprise at least one of a photo detector, an acceleration sensor, a temperature sensor, and a humidity sensor.

In some illustrative embodiments of the present disclosure, the sensor tag may further comprise a solar cell module (not illustrated) or photovoltaic cell in electrical connection with the chip module (not illustrated) of the sensor device 7. For example, the sensor device 7 may comprise the solar cell module (not illustrated) as an integrated sub module or it may be coupled in the end region 11c with the solar cell module (not illustrated) as a separate module. In some illustrative examples, the solar cell module (not illustrated) is electrically connected with the sensor device 7 via an electrically conductive interconnection, e.g., a connecting wiring provided on or in the flexible base substrate 3, separate from the electrically conductive interconnection 9. That is, the solar cell module (not illustrated) is not necessarily directly connected to the electrically conductive interconnection 9. In examples herein, the solar cell module (not illustrated) may be used as a power source (not illustrated) for powering the sensor device 7. For example, the sensor device 7 may be configured to activate a deactivation signal within the chip module (not illustrated) of the sensor device 7 for temporarily or permanently deactivating the chip module in response to electrical power received from the solar cell module. In other words, upon the solar cell module (not illustrated), being exposed to electromagnetic radiation and thereby, generating electrical power, outputting the power to the sensor device 7, the chip module (not illustrated) of the sensor device 7 will be temporarily or permanently deactivated upon the chip module receiving electrical power from the solar cell module (not illustrated) at chip module inputs (not illustrated) that are in direct electrical connection with the solar cell module (not illustrated), while sensor device input terminals (not illustrated) electrically coupled with the chip module (not illustrated) and the electrically conductive interconnection 9 are not directly connected to the solar cell module (not illustrated). Accordingly, a temporarily or permanently deactivated chip module may indicate exposure of the sensor device 7 to electromagnetic radiation within a predetermined time frame during a temporary deactivation or at a certain point in the past when the sensor device 7 is permanently deactivated.

In other illustrative embodiments of the present disclosure, the sensor device 7 may comprise a memory (not illustrated) logging events such as an event caused by the solar cell module (not illustrated) powering the sensor device 7. Additionally, or alternatively, the memory (not illustrated) may log data created by the sensor device 7, such as detected physical quantities sensed by the sensor device 7. Additionally, or alternatively, the memory (not illustrated) may log data regarding communication with the sensor device 7 via the antenna pattern 5 to an external reading device (not illustrated). Additionally, or alternatively, the memory (not illustrated) may have encryption data saved thereon, such as one or more encryption keys used for encrypting and decrypting communication between the sensor device 7 and the external reading device (not illustrated) via the antenna pattern 5.

In other illustrative embodiments of the present disclosure, a solar cell module (not illustrated) may be located at the end region 11a as an electrical power source for the sensor tag 1. Herein, the solar cell module (not illustrated) may be directly coupled with the electrically conductive interconnection 9 for supplying electrical power to the sensor device 7 via the electrically conductive interconnection 9. Details on how the antenna pattern 5 may be electrically coupled to the electrically conductive interconnection 9 will be described with respect to Figure 2 to 4 below.

With ongoing reference to Figure 1 and in some illustrative embodiments of the present disclosure, the antenna pattern 5, the electrically conductive interconnection 9, and the sensor device 7 may be formed on a common surface of the flexible base substrate 3. For example, the electrically conductive interconnection 9 and the antenna pattern 5 may be formed by conductive wiring tracks provided in a common surface of the flexible base substrate 3, e.g., by printing, etching or pasting electrical conductive track lines in a common surface of the flexible base substrate 3. The antenna pattern 5 may be coupled to the electrically conductive interconnection 9 by connecting the electrically conductive interconnection 9 via the terminals 13a and 13b. The terminals 13a and 13b may be provided as contact pads formed on the common surface of the flexible base substrate 3.

In some alternative embodiments of the present disclosure, the antenna pattern 5 and the sensor device 7 may be formed on opposite surfaces of the flexible base substrate 3 such that the electrically conductive interconnection 9 is coupled to, or comprises at least one electrical vertical interconnection extending between the two opposite surfaces of the flexible base substrate 3 through the flexible base substrate 3. In some illustrative examples, the terminals 13a and 13b may be formed as vertical interconnections extending between two opposite surfaces of the flexible base substrate 3. Alternatively, the electrically conductive interconnection 9 may have at least one vertical interconnection formed in the intermediate region 11b. In still another alternative embodiment, one of the terminals 13a and 13b may be provided in form of a vertical interconnection, while another vertical interconnection may be formed in the intermediate region 11b such that one track line or wiring line of the electrically conductive interconnection 9 in the intermediate region 11b is provided on two opposite surfaces of the flexible base substrate 3.

Although the electrically conductive interconnection 9 is described with respect to wiring or track lines formed on a surface of the flexible base substrate 3 (either the common surface or an opposite surface as described above), this does not impose any limitation onto the present disclosure and conductive track lines of the electrically conductive interconnection 9 may be at least partially embedded into the flexible base substrate, e.g., in the form of buried wiring tracks being completely routed within the flexible base substrate 3, connected to the antenna pattern 5 and/or the sensor device 7 by means of one or more vertical interconnections.

With reference to Figure 1a, alternative embodiments of the sensor tag 1 of Figure 1 will now be described in greater detail. Figure 1a shows a sensor tag 40 which may be considered as corresponding to the sensor tag 1 in accordance with embodiments having the antenna pattern 5 and the sensor device 7 formed on different sides of the sensor tag 1.

In the illustration of Figure 1a, a cross sectional view corresponding to a cross section along line 1a to 1a in Figure 1 is schematically shown. In other words, the sensor tag 40 may be considered as being identical with the sensor tag 1 shown in Figure 1 in case that the antenna pattern 5 and the sensor device 7 in Figure 1 are formed on opposite surfaces of the flexible base substrate 3 of Figure 1, while the sensor tag 40 of Figure 1a is to be considered as an alternative embodiment with the sensor tag 1 of Figure 1 in case that the antenna pattern 5 and the sensor device 7 shown in Figure 1 are considered to be on a common surface of the flexible base substrate 3.

Referring to Figure 1a, the sensor tag 40 comprises a flexible base substrate 43 provided in a multilayer configuration, an antenna pattern 45, and a sensor device 47. The antenna pattern 45 is formed in an end region 51a at the first end of the flexible base substrate 43, while the sensor device 47 is formed at a second end opposite the first end in an end region 51c, opposite the end region 51a. Between the end regions 51a and 51c, an intermediate region 51b is formed such that the end regions 51a and 51c are separated by the intermediate region 51b.

As described above, the flexible base substrate is provided as a multi-layer substrate having a top layer 43a, an intermediate layer 43b, and a bottom layer 43c, such that the intermediate layer 43b sandwiched between the top layer 43a and the bottom layer 43c. In explicit examples herein, the intermediate layer 43b may be provided by epoxy glass or any other appropriate polymer material. Furthermore, the flexible base substrate 43 may have an adhesive film 44 formed on the bottom layer 43c, such that the sensor tag 40 may be attached to an item (not illustrated) via the adhesive film 44.

In some illustrative examples herein, the top layer 43a and/or the bottom layer 43c may comprise a thermoplastic material which may be a material prepared by at least one of polyimide (PI), Polyethylene terephthalate (PET), Polyvinyl chloride (PVC), and FR-4, where FR-4 is a composite material composed of woven fiberglass cloth with an epoxy resin binder that is flame resistant (self-extinguishing). Accordingly, easy and cost efficient fabrication of functional base substrates may be achieved for use as the flexible base substrate 43.

The intermediate layer 43b may represent the base substrate layer on which the antenna pattern 45, the sensor device 47 and a electrically conductive interconnection 49 are provided. In the fabrication of the flexible base substrate 43, the intermediate layer 43b may be equipped with the antenna pattern 45 and/or the electrically conductive interconnection 49 and/or the sensor device 47. Then, the top layer 43a and the bottom layer 43c may be formed on the intermediate layer 43.

In accordance with other illustrative embodiments, the sensor tag 1 shown in Fig. 1 may be fabricated in accordance with wire-embedding technology in which the sensor device 7 is provided by a module integrated into the flexible base substrate 3. Herein, the antenna pattern 5 is formed via wire embedding in the flexible base substrate 3. The module and wire of the electrical interconnection 9 are bonded to each other, e.g., by welding, for establishing an electrical interconnection between the module and the antenna pattern 5. For example, the module may be inserted into a recess formed in the flexible base substrate 3 such that contact pads of the module are aligned with contact pads of the electrical interconnection 9 in the flexible base substrate 3, the contact pads of the electrical interconnection in the flexible base substrate 3 being exposed by the recess, and the module is inserted into the recess such that the contact pads are brought into contact with each other. Although a flexible base substrate is described in this context, this does not imply any limitation and a rigid base substrate, e.g., a laminated substrate in accordance with printed circuit board techniques, may be considered instead.

Referring now to Figure 2, a top view of a sensor tag 20 in accordance with some illustrative embodiments of the present disclosure is schematically illustrated. The sensor tag 20 comprises a flexible base substrate 23, an antenna pattern 25 and a sensor device 27.

The antenna pattern 25 is formed at the first end of the flexible base substrate 23 in a first end region 31a adjacent, an intermediate region 31b. Adjacent to the intermediate region 31b and at a second end opposite the first end, the sensor device 27 is formed in a second end region 31c of the flexible base substrate 23. The antenna pattern 25 is connected by an electrically conductive interconnection extending through the intermediate region 31b to the end region 31c for contacting the sensor device 27 such that the antenna pattern 25 and the sensor device 27 are electrically connected on the flexible base substrate 23.

In some illustrative examples herein, the sensor device 27 may comprise at least one additional sensor element in an electronic connection with a chip module indicated by reference numeral 27a in Figure 2. Herein, an illustrative additional sensor element is indicated by reference numeral 27b in Figure 2, being in electrical connection by connecting lines 27c coupling the chip module 27a and the additional sensor element 27b. Although Figure 2 only illustrates a single additional sensor element 27b, this does not impose any limitation onto the present disclosure and more than one additional sensor element may be provided.

In some illustrative examples, a power source coupled to chip module 27a in Figure 2 may be provided by element 27b instead or in addition to one or more additional sensor elements (not illustrated). The power source 27a may be a battery for allowing continuous logging of data instead of only performing measurements during a reading communication subjected to the sensor tag via an external reading device.

In some specific examples herein, the power source 27b may be or further comprise a solar cell module in electric connection with a chip module 27a. Accordingly, the solar cell module 27b may implement a power source for the chip module when exposing the sensor tag 20 to light. Alternatively, the solar cell module 27b may be used instead of a photodetector. For example, the solar cell module 27b may be configured to power the chip module 27a with electrical power and/or the chip module 27a may be configured to at least one of generating an event signal, storing event information and outputting a notification signal of the antenna pattern 25 on the basis of electrical power received from the solar cell module 27b. In this respect, the solar cell module 27b represents an electrical power source and/or may implement a sensor for sensing exposure of the sensor tag 20 to electromagnetic radiation and logging exposure to electromagnetic radiation as well as responding to exposure to electromagnetic radiation.

In some more specific examples herein, the chip module 27a may be configured to activate a deactivation signal within the chip module 27a for temporarily or permanently deactivating the chip module 27a in response to electrical power received from the solar cell module 27b. Accordingly, the chip module 27a may be deactivated, e.g., exposure to electromagnetic radiation may trigger the solar cell module 27b to issue a "chip kill" signal, i.e., a signal for permanently deactivating the chip module 27a in response to electrical power generated by the solar cell module 27b and output to the chip module 27a from the solar cell module 27b. That is, an one-time sensor for detecting exposure to electromagnetic radiation may be implemented in that the sensor tag 20 representing a non-active sensor tag may indicate exposure to electromagnetic radiation thereby indicating that a good equipped with the sensor tag 20 may be undesirably exposed to electromagnetic radiation. In other cases, a temporary deactivation of the sensor tag 20 may indicate a temporary non-availability of a good equipped with the sensor tag 20 due to a temporary exposure to electromagnetic radiation. Additionally or alternatively, tamper information may be stored by the chip module 27a, allowing to log possible tamper events detected by the sensor tag 20.

With ongoing reference to Figure 2, the antenna pattern may be provided as a planar winding pattern, e.g., in the form of a spiral antenna pattern with antenna terminal 35a located inside the spiral winding pattern of the antenna pattern 25. The antenna terminal 35a may be electrically connected by a bridging portion 33 with a terminal 35b of the electrically conductive interconnection.

With regard to Figures 3 and 4, two alternative implementations of the bridging portion 33 are schematically illustrated and explained below in greater detail. The bridging portion 33 as shown in Figure 2 has an electrically conductive bridge 37 crossing a winding track WT of the antenna pattern 25.

Now referring to Figure 3, a possible implementation of the electrically conductive bridge 37 is schematically illustrated in Fig 2 by means of a conductive bridge 37a. In the schematic cross sectional view along line 2-2 in Figure 2, Figure 3 shows the conductive bridge 37a as a bypass bridge for bypassing the winding track WT of the antenna pattern 25 between the terminals 35a and 35b. The terminals 35a and 35b are located on an upper side or first side of 23u of the flexible base substrate 23, while the conductive bridge 37a is formed as a backside bridging track 37c formed on the opposite side 23d of the flexible base substrate 23. The line 37c extends between two vertical interconnections V1 and V2, the vertical interconnection V1 contacting the terminal 35a and coupling to the line 37c on the side 23d of the flexible base substrate 23. The vertical interconnection V2 contacts the terminal 35b and extends towards the line 37c on the side 23d.

Referring to Figure 4, an alternative implementation of the conductive bridge 37 is schematically shown in the cross sectional view along line 2-2 in Figure 2 corresponding to an implementation in form of a conductive bridge 37b completely located on the side 23u of the flexible base substrate 23. That is, no conductive line element is formed on the side 23d of the flexible base substrate 23 between the terminals 35a and 35b. The winding track WT between the terminals 35a and 35b is encapsulated by an insulator 38, at least in the region of the conductive bridge 37b and an electrically conductive material 37d is provided as a bridging element between terminal 35a and 35b over the winding track WT.

Although, the sensor tag 20 shown in Figure 2 is schematically illustrated and described with regard to an implementation in which the antenna pattern 25 and the sensor device 27 are located on a common surface of the sensor tag 20, i.e., the surface 23u in the illustration of Figures 3 and 4, this does not impose any limitations on the present disclosure and the person skilled in the art will appreciate that the antenna pattern 25 and the sensor device 27 may be formed on opposite surfaces such that the antenna pattern 25 may be formed on one of the surfaces 23u and 23d in the illustration of Figure 3 and 4, while the sensor device 27 may be formed on the other surface of the surfaces 23u and 23d in the illustration of Figures 3 and 4. In this case, upon the antenna pattern 25 and the sensor device 27 being formed on opposite surface of the flexible base substrate 23, the conductive bridge 37a shown in Figure 3 may be modified to only have the vertical interconnection V1, while omitting the vertical interconnection V2 such that the bridging element 37c runs along the surface 23d through the intermediate region 31b to the end region 31c for contacting the sensor device 27.

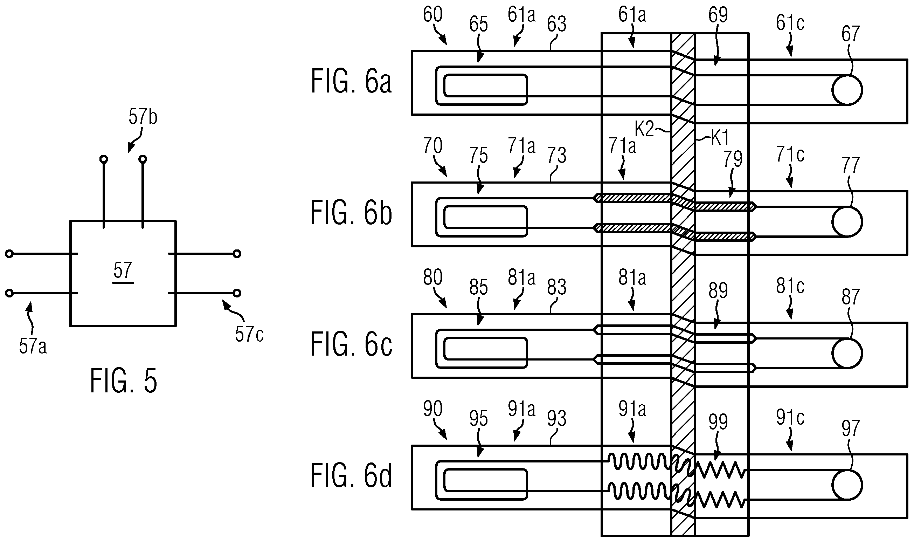

Referring to Figure 5, a sensor device 57 is schematically illustrated as a chip module, the chip module having terminals 57a allowing for connection to a power supply and to NFC functions, having terminals 57b for connection to a temperature sensor, and connections 57c to an alternative power supply, such as a solar cell module.

The chip module 57 may correspond to each of the sensor devices 7, 27, and 47 as described above with regard to Figures 1 to 4.

Referring to Figure 6a to 6d, various embodiments of a sensor tag are now described in greater detail in addition or as an alternative to the sensor tags described above with regard to Figures 1 to 5.

Referring to Figure 6a, a sensor tag 60 is schematically illustrated in a top view, the sensor tag 60 having a flexible base substrate 63, an antenna pattern 65 and a sensor device 67. The antenna pattern 65 and the sensor device 67 are electrically connected by an electrically conductive interconnection 69 extending between the antenna pattern 65 and the sensor device 67. The antenna pattern 65 is arranged on a first end region 61a at the first end of the flexible base substrate 63, while the sensor device 67 is arranged on a second end region 61c at the second end opposite the first end of the flexible base substrate 63. An intermediate region 61b is located between the first end region 61a and the second end region 61c. The intermediate region 61b only comprises the electrically conductive interconnection 69 such that the antenna pattern 65 is completely formed in the first end region 61a, while the sensor device 67 is completely formed within the second end region 61c.

With ongoing reference to Figure 6a, a bending or folding line K1 and a bending or folding line K2 are schematically illustrated, the bending lines K1 and K2 representing bending lines along which the flexible base substrate 63 may be bent. Some illustrative examples herein, the bending lines may be provided by material portions of the intermediate region 61b in which the flexible base substrate 63 has a higher elasticity than in the end region 61a and 61c. For example, the bending lines may correspond to recessed material portions of the intermediate region 61b such that the flexible base substrate 63 is recessed along the bending lines K1 and K2 in the intermediate region 61b relative to the flexible base substrate 63 and the end regions 61a and 61c. In some other illustrative examples herein, the bending lines K1 and K2 may represent material portions of the flexible base substrate in which the flexible base substrate 63 is provided by a different material than in the end region 61a and 61c, such as a material of a higher elasticity than the material of the flexible base substrate in the end region 61a and 61c.

The electrically conductive interconnection 69 in the intermediate region 61b may be considered as representing a bending material portion at least in a region of the intermediate region 61b at the bending lines K1 and K2. In other words, a bending material portion may be understood as representing a material portion of at least the electrically conductive interconnection and optionally, the flexible base substrate 63 at a region along each bending line K1 and K2. For example, the flexible base substrate 63 in the intermediate region 61b may be modified for implementing a bending line or may be identical with the flexible base substrate 63 outside the intermediate region 61b. The electrically conductive interconnection 69 in the intermediate region 61b may be identical to the conductive line tracks in the end regions 61a and 61c or the electrically conductive interconnection 69 may at least, at the bending lines K1 and K2 in bending material portions have a different material characteristic or be of a different material than outside the intermediate region 61b. In a special illustrative example, the electrically conductive interconnection 69 in the intermediate region 61b may be of a material of high elasticity at least in a bending material portion when compared to the material of the electrically conductive interconnection outside of a bending material portion and the material of conductive wire checks outside the intermediate region 61b. In a special illustrative example herein, the bending material portion may be given by the electrically conductive interconnection 69 at least in the bending material portions being provided by copper, while conductive wire tracks outside of the bending material portions and in particular outside of the intermediate region 61b may be given by aluminum.

Referring to Figure 6b, a sensor tag 70 is schematically illustrated in a top view, the sensor tag 70 having a flexible base substrate 73, an antenna pattern 75 and a sensor device 77. The antenna pattern 75 and the sensor device 77 are electrically connected by an electrically conductive interconnection 79 extending between the antenna pattern 75 and the sensor device 77. The antenna pattern 75 is arranged on a first end region 71a at the first end of the flexible base substrate 73, while the sensor device 77 is arranged on a second end region 71c at the second end opposite the first end of the flexible base substrate 73. An intermediate region 71b is located between the first end region 71a and the second end region 71c. The intermediate region 71b only comprises the electrically conductive interconnection 79 such that the antenna pattern 75 is completely formed in the first end region 71a, while the sensor device 77 is completely formed within the second end region 71c.

With ongoing reference to Figure 6b, the bending or folding line K1 and the bending or folding line K2 of Figure 6a are schematically illustrated for the ease of illustration as extending over the sensor tag 70. This serves only for ease of illustration and does not imply any positional or functional relation between the sensor tag 60 and the sensor tag 70. It is not intended to have the sensor tags 60 and 70 arranged in any positional and/or functional relationship and imply any limitation for the sensor tag 70 based on the sensor tag 60, although a transfer of features and functions as described with respect to the sensor tag 60 may possibly also apply to the sensor tag 70, i.e., a combination of the disclosure relating to the sensor tag 60 of Figure 6a and the disclosure relating to the sensor tag 70 of Figure 6b is not excluded. Accordingly, the bending lines K1 and K2 representing bending lines along which the flexible base substrate 73 may be bent. Some illustrative examples herein, the bending lines may be provided by material portions of the intermediate region 71b in which the flexible base substrate 73 has a higher elasticity than in the end region 71a and 71c. For example, the bending lines may correspond to recessed material portions of the intermediate region 71b such that the flexible base substrate 73 is recessed along the bending lines K1 and K2 in the intermediate region 71b relative to the flexible base substrate 73 and the end regions 71a and 71c. In some other illustrative examples herein, the bending lines K1 and K2 may represent material portions of the flexible base substrate in which the flexible base substrate 73 is provided by a different material than in the end region 71a and 71c, such as a material of a higher elasticity than the material of the flexible base substrate in the end region 71a and 71c.

The electrically conductive interconnection 79 in the intermediate region 71b may be considered as representing a bending material portion at least in a region of the intermediate region 71b at the bending lines K1 and K2. In other words, a bending material portion may be understood as representing a material portion of at least the electrically conductive interconnection and optionally, the flexible base substrate 73 at a region along each bending line K1 and K2. For example, the flexible base substrate 73 in the intermediate region 71b may be modified for implementing a bending line or may be identical with the flexible base substrate 73 outside the intermediate region 71b. The electrically conductive interconnection 79 in the intermediate region 71b may be at least partially different from the conductive line tracks in the end regions 71a and 71c. That is, the electrically conductive interconnection 79 may at least, at the bending lines K1 and K2 in bending material portions have a different shape and optionally material characteristic or be of a different material than outside the intermediate region 71b. In a special illustrative example, the electrically conductive interconnection 79 in the intermediate region 71b may be of a strip-like shape and possibly have a material of high elasticity at least in a bending material portion when compared to the material of the electrically conductive interconnection outside of a bending material portion and the material of conductive wire checks outside the intermediate region 71b. For example, the electrically conductive interconnection 79 in the intermediate region 71b may have a greater width than the any wiring outside this region. In a special illustrative example herein, the bending material portion may be given by the electrically conductive interconnection 79 of a greater width and in shape of a strip at least in the bending material portions (possibly provided by copper), while conductive wire tracks outside of the bending material portions and in particular outside of the intermediate region 71b may be given by a wire routing, e.g., of copper or aluminum.

Referring to Figure 6c, a sensor tag 80 is schematically illustrated in a top view, the sensor tag 80 having a flexible base substrate 83, an antenna pattern 85 and a sensor device 87. The antenna pattern 85 and the sensor device 87 are electrically connected by an electrically conductive interconnection 89 extending between the antenna pattern 85 and the sensor device 87. The antenna pattern 85 is arranged on a first end region 81a at the first end of the flexible base substrate 83, while the sensor device 87 is arranged on a second end region 81c at the second end opposite the first end of the flexible base substrate 83. An intermediate region 81b is located between the first end region 81a and the second end region 81c. The intermediate region 81b only comprises the electrically conductive interconnection 89 such that the antenna pattern 85 is completely formed in the first end region 81a, while the sensor device 87 is completely formed within the second end region 81c.

With ongoing reference to Figure 6c, the bending or folding line K1 and the bending or folding line K2 of Figure 6a and 6b are schematically illustrated for the ease of illustration as extending over the sensor tag 80. This serves only for ease of illustration and does not imply any positional or functional relation between the sensor tags 60 to 80. It is not intended to have the sensor tags 60 to 80 arranged in any positional and/or functional relationship and imply any limitation for the sensor tag 80 based on the sensor tags 60 and 70, although a transfer of features and functions as described with respect to the sensor tags 60 and 70 may possibly also apply to the sensor tag 80, i.e., a combination of the disclosure relating to the sensor tags 60 of Figure 6a and 70 of Figure 6b and the disclosure relating to the sensor tag 80 of Figure 6c is not excluded. Accordingly, the bending lines K1 and K2 representing bending lines along which the flexible base substrate 83 may be bent. Some illustrative examples herein, the bending lines may be provided by material portions of the intermediate region 81b in which the flexible base substrate 83 has a higher elasticity than in the end region 81a and 81c. For example, the bending lines may correspond to recessed material portions of the intermediate region 81b such that the flexible base substrate 83 is recessed along the bending lines K1 and K2 in the intermediate region 81b relative to the flexible base substrate 83 and the end regions 81a and 81c. In some other illustrative examples herein, the bending lines K1 and K2 may represent material portions of the flexible base substrate in which the flexible base substrate 83 is provided by a different material than in the end region 81a and 81c, such as a material of a higher elasticity than the material of the flexible base substrate in the end region 81a and 81c.

The electrically conductive interconnection 89 in the intermediate region 81b may be considered as representing a bending material portion at least in a region of the intermediate region 71b at the bending lines K1 and K2. In other words, a bending material portion may be understood as representing a material portion of at least the electrically conductive interconnection and optionally, the flexible base substrate 83 at a region along each bending line K1 and K2. For example, the flexible base substrate 83 in the intermediate region 81b may be modified for implementing a bending line or may be identical with the flexible base substrate 83 outside the intermediate region 81b. The electrically conductive interconnection 89 in the intermediate region 81b may be at least partially different from the conductive line tracks in the end regions 81a and 81c. That is, the electrically conductive interconnection 89 may at least, at the bending lines K1 and K2 in bending material portions have an electrically conductive wiring embedded into a material of different shape and optionally material characteristic or be of a different material than outside the intermediate region 81b. In a special illustrative example, the electrically conductive interconnection 89 in the intermediate region 81b may be of a wire embedded into strip-like material possibly having a higher elasticity at least in a bending material portion when compared to the electrically conductive material of the electrically conductive interconnection 89. For example, the electrically conductive interconnection 89 in the intermediate region 81b may have a greater width than the any wiring outside this region due to the embedding material. In a special illustrative example herein, the bending material portion may be given by the embedding material for the wiring of the electrically conductive interconnection 89 of a greater width and in shape of a strip at least in the bending material portions, while conductive wire tracks outside of the bending material portions and in particular outside of the intermediate region 81b.

Referring to Figure 6d, a sensor tag 90 is schematically illustrated in a top view, the sensor tag 90 having a flexible base substrate 93, an antenna pattern 95 and a sensor device 97. The antenna pattern 95 and the sensor device 97 are electrically connected by an electrically conductive interconnection 99 extending between the antenna pattern 95 and the sensor device 97. The antenna pattern 95 is arranged on a first end region 91a at the first end of the flexible base substrate 93, while the sensor device 97 is arranged on a second end region 91c at the second end opposite the first end of the flexible base substrate 93. An intermediate region 91b is located between the first end region 91a and the second end region 91c. The intermediate region 91b only comprises the electrically conductive interconnection 99 such that the antenna pattern 95 is completely formed in the first end region 91a, while the sensor device 97 is completely formed within the second end region 91c.

With ongoing reference to Figure 6d, the bending or folding line K1 and the bending or folding line K2 of Figures 6a to 6c are schematically illustrated for the ease of illustration as extending over the sensor tag 90. This serves only for ease of illustration and does not imply any positional or functional relation between the sensor tags 60 to 90. It is not intended to have the sensor tags 60 to 90 arranged in any positional and/or functional relationship and imply any limitation for the sensor tag 90 based on the sensor tags 60 to 80, although a transfer of features and functions as described with respect to the sensor tags 60 to 80 may possibly also apply to the sensor tag 90, i.e., a combination of the disclosure relating to the sensor tags 60 of Figure 6a, 70 of Figure 6b, and 80 of Figure 6c, and the disclosure relating to the sensor tag 90 of Figure 6c is not excluded. Accordingly, the bending lines K1 and K2 representing bending lines along which the flexible base substrate 93 may be bent. Some illustrative examples herein, the bending lines may be provided by material portions of the intermediate region 91b in which the flexible base substrate 93 has a higher elasticity than in the end region 91a and 91c. For example, the bending lines may correspond to recessed material portions of the intermediate region 91b such that the flexible base substrate 93 is recessed along the bending lines K1 and K2 in the intermediate region 91b relative to the flexible base substrate 93 and the end regions 91a and 91c. In some other illustrative examples herein, the bending lines K1 and K2 may represent material portions of the flexible base substrate in which the flexible base substrate 93 is provided by a different material than in the end region 91a and 91c, such as a material of a higher elasticity than the material of the flexible base substrate in the end region 91a and 91c.

The electrically conductive interconnection 99 in the intermediate region 91b may be considered as representing a bending material portion at least in a region of the intermediate region 71b at the bending lines K1 and K2. In other words, a bending material portion may be understood as representing a material portion of at least the electrically conductive interconnection and optionally, the flexible base substrate 93 at a region along each bending line K1 and K2. For example, the flexible base substrate 93 in the intermediate region 91b may be modified for implementing a bending line or may be identical with the flexible base substrate 93 outside the intermediate region 91b. The electrically conductive interconnection 99 in the intermediate region 91b may be at least partially different from the conductive line tracks in the end regions 91a and 91c. That is, the electrically conductive interconnection 99 may at least, at the bending lines K1 and K2 in bending material portions have an electrically conductive wiring pattern provided as a meander pattern or any other curved wire routing which implements a mechanical spring function for allowing elastic elongation of the conductive wire pattern when exposed to mechanical strain acting on an extension direction of the electrically conductive interconnection 99. Accordingly, a mechanical spring is realized which may allow for expanding forces acting along a direction substantially parallel to a direction pointing from the antenna pattern 95 to the sensor device 99 and vice versa. In a special illustrative example, the electrically conductive interconnection 99 may have a wire routing at each of the bending lines K1 and K2 such that the routing intersects the bending lines K1 and K2 under an angle different from 90°.

Each of the sensor tags 60 to 90 as described above with Figures 6a, 6b, 6c and 6d, may be implemented in combination with at least one of the sensor tags 1, 20, and 40 as described above with regard to Figures 1 to 5 such that the disclosure of the sensor tags, 60 to 90 as described above regarding each of Figures 6a to 6d may be combined with the disclosure of each of the sensor tags 1, 20 and 40 described above with regard to Figures 1 to 5. In particular, any of the sensor tags, 1, 20 and 40 with regard to Figures 1 to 5 may be modified with at least one feature described with respect to Figure 6a to 6d and vice versa. Particularly, the antenna pattern 65, 75, 85, 95 and/or the sensor devices, 67, 77, 87, 97 may be modified, adapted to, or identified with respective ones of antenna patterns 5,25, and 45 and/or sensor devices 7, 27, and 47.

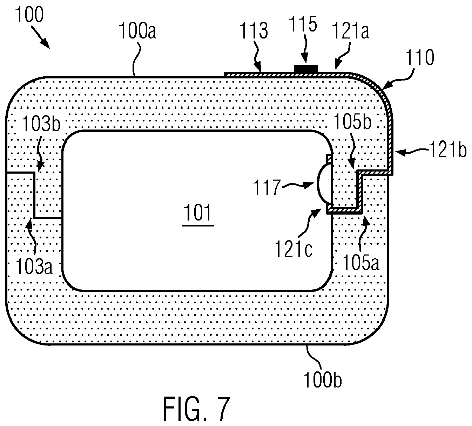

Referring to Figure 7, a storing container in accordance with some illustrative embodiments of the present disclosure will be described in greater detail. Figure 7 schematically shows in a cross-sectional view a storing container 100 having a lid element 100a and a bottom element 100b such that an opening of the bottom element 100b may be plausibly covered by the lid element 100a. A storing volume 101 within the storing container 100 is thereby accessible upon separating the lid element 100a and the bottom element 100b.

In accordance with some illustrative examples, the storing container may be a thermal insulation box, for example, a thermal insulation box of Styrofoam or a container formed of a metal material. In some illustrative examples herein, the thermal insulation box may have container walls enclosing the storing volume 101, the container having a minimum thickness of 30mm, preferably a thickness in a range between 30mm and 100mm.

In some special illustrative examples herein, the storing container 100 may be provided by the lid element 100a at least partially comprising a metal material or being at least partially formed of a metal material. Additionally or alternatively, the lid element 100a may at least partially comprise a metal material or may be at least partially formed of a metal material.

With ongoing reference to Figure 7, the storing container 100 may have a labyrinth seal provided by edges on a rim of the bottom element 100b matching with an edge 103b of the lid element 100a, as well as edge 105a and edge 105b and an opposite side of the bottom element 100b and the lid element 100a, respectively.

The storing container further comprises a sensor tag 110 arranged on the storing container 100 such that at least a sensor device 117 of the sensor tag 110 is located within the storing volume 101 so as to be exposed to the storing volume 101 of the storing container 100. The sensor tag 110 further comprises a flexible base substrate 113 is formed on one end region 121c opposite an end region 121a in which an antenna pattern 115 is formed. Between both end regions 121a and 121c, an intermediate region 121b is arranged and an electrically conductive interconnection (not illustrated) connecting the antenna pattern 115 and the sensor device 117.

The sensor tag 110 as illustrated in Figure 7 may be identical with or correspond to any of the sensor tags described above with regard to Figures 1 to 6. Accordingly, the disclosure of each of the sensor tags, 1, 20, 40, 60, 70, 80, 90 as described above is incorporated at this point by reference.

In the illustration of Figure 7 the antenna pattern 115 is located outside of the storing container 100 to be exposed to an environment of the storing container 100 such that a reading device may be approach with the antenna pattern 115 for communicating with the sensor device 117 and the antenna pattern 115. In particular, no material section of the storing container 100 is located between the antenna portion 115 and a reading device (not illustrated) used for communicating with the sensor device 117.

The flexible base substrate 113 of the sensor tag 110 is arranged on the lid element 100a such that the sensor device 117 is arranged upon an inner sidewall of the lid element 100a, while the antenna pattern 115 is arranged on an outer surface of the lid element 100a exposed to the outside of the storing container 100. For this reason, the flexible base substrate 113 has at least one bending line, in particular a bending line associated with each edge of the lid element 100a. In total, as illustrated in Figure 7, the flexible base substrate 113 is bent four times, therefore the flexible base substrate 113 having four bending lines. Accordingly, the sensor tag 110 may be implemented with respect to each of the sensor tags 60 to 90 as described above with regard to Figure 6a to 6d with the modification of a number of bending lines corresponding to four bending lines. Accordingly, the flexible base substrate 113 and/or the electrically conductive interconnection (not illustrated) may have up to four bending material portions, each being provided as disclosed above with regard to Figures 6a to 6d. Although the storing container 100 is illustrated in Figure 7 with the sensor tag 110 being attached to the lid element 100a, this does not pose any limitation to the present disclosure and the sensor tag 110 may be attached to the bottom element 100b instead.

Although the storing container 100 of Figure 7 is illustrated as a thermal insulation box, this does not pose any limitation to the present disclosure and the storing container 100 may be provided by any container having a closeable opening and a storing volume accessible via the closeable opening.

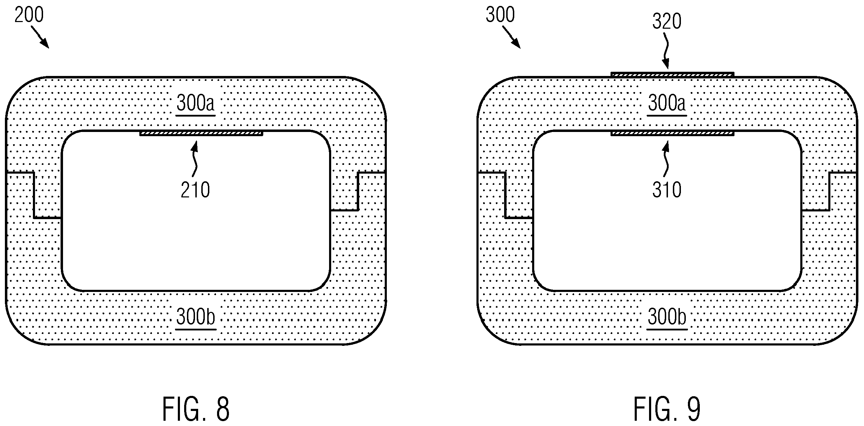

Referring to Figure 8, a storing container in accordance with some illustrative embodiments of the present disclosure will be described in greater detail. Figure 8 schematically shows in a cross-sectional view a storing container 200 having a lid element 200a and a bottom element 200b such that an opening of the bottom element 200b may be plausibly covered by the lid element 200a. A storing volume 201 within the storing container 200 is thereby accessible upon separating the lid element 200a and the bottom element 200b.

In accordance with some illustrative examples, the storing container may be a thermal insulation box, for example, a thermal insulation box of Styrofoam or a container formed of a metal material. In some illustrative examples herein, the thermal insulation box may have container walls enclosing the storing volume 201, the container having a minimum thickness of 30mm, preferably a thickness in a range between 30mm and 100mm.

In some special illustrative examples herein, the storing container 200 may be provided by the lid element 200a at least partially comprising a metal material or being at least partially formed of a metal material. Additionally or alternatively, the lid element 200a may at least partially comprise a metal material or may be at least partially formed of a metal material.

With ongoing reference to Figure 8, the storing container 200 may have a labyrinth seal provided by in accordance with the labyrinth seal described in the context of the storing container 100 of Figure 7 above, the disclosure of which is incorporated by reference in its entirety.

The storing container further comprises a sensor tag 210. The sensor tag 210 may correspond any of the sensor tags as described above with respect to Figures 1 to 6 above, the disclosure of which is incorporated by reference in its entirety. As the sensor tag 210 is completely arranged within the storing container 200, a sensor device (not illustrated) is exposed to the storing volume 201 and an antenna pattern (not illustrated) of the sensor tag 210 is arranged within the storing volume 201. The sensor tag 210 may be coupled to an electrical power source (not illustrated) or have the electrical power source (not illustrated) included therein. In any case, the sensor device (not illustrated) and the antenna pattern (not illustrated) are powered by the electrical power source (not illustrated), the power source (not illustrated) supplying sufficient electrical power to the antenna pattern such that an external reading device (not illustrated), such as a smartphone, may communicate with the sensor tag 210.

A base substrate (not illustrated) of the sensor tag 210 may be arranged on the lid element 200a such that the sensor device (not illustrated) is arranged upon an inner sidewall of the lid element 200a for monitoring at least one physical quantity within the storing volume.

Although the storing container 200 of Figure 8 is illustrated as a thermal insulation box, this does not pose any limitation to the present disclosure and the storing container 200 may be provided by any container having a closeable opening and a storing volume accessible via the closeable opening.

Referring to Figure 9, a storing container in accordance with some illustrative embodiments of the present disclosure will be described in greater detail. Figure 9 schematically shows in a cross-sectional view a storing container 300 having a lid element 300a and a bottom element 300b such that an opening of the bottom element 300b may be plausibly covered by the lid element 300a. A storing volume 301 within the storing container 300 is thereby accessible upon separating the lid element 300a and the bottom element 300b.

In accordance with some illustrative examples, the storing container may be a thermal insulation box, for example, a thermal insulation box of Styrofoam or a container formed of a metal material. In some illustrative examples herein, the thermal insulation box may have container walls enclosing the storing volume 301, the container having a minimum thickness of 30mm, preferably a thickness in a range between 30mm and 100mm.

In some special illustrative examples herein, the storing container 300 may be provided by the lid element 300a at least partially comprising a metal material or being at least partially formed of a metal material. Additionally or alternatively, the lid element 300a may at least partially comprise a metal material or may be at least partially formed of a metal material.

With ongoing reference to Figure 9, the storing container 300 may have a labyrinth seal provided by in accordance with the labyrinth seal described in the context of the storing container 100 of Figure 7 above, the disclosure of which is incorporated by reference in its entirety.

The storing container further comprises a sensor tag 310. The sensor tag 310 may correspond any of the sensor tags as described above with respect to Figures 1 to 6 above, the disclosure of which is incorporated by reference in its entirety. As the sensor tag 310 is completely arranged within the storing container 300, a sensor device (not illustrated) is exposed to the storing volume 301 and an antenna pattern (not illustrated) of the sensor tag 310 is arranged within the storing volume 301.

In some illustrative embodiments, the sensor tag 310 may be coupled to an electrical power source (not illustrated) or have the electrical power source (not illustrated) included therein. In any case, the sensor device (not illustrated) and the antenna pattern (not illustrated) are powered by the electrical power source (not illustrated), the power source (not illustrated) supplying sufficient electrical power to the antenna pattern such that an external reading device (not illustrated), such as a smartphone, may communicate with the sensor tag 310.

A base substrate (not illustrated) of the sensor tag 310 may be arranged on the lid element 300a such that the sensor device (not illustrated) is arranged upon an inner sidewall of the lid element 300a for monitoring at least one physical quantity within the storing volume.

With ongoing reference to Figure 9, the storing container 300 further comprises a booster antenna 320 having a booster antenna pattern (not illustrated) arranged on an outer surface of a sidewall of the storing container 300. The booster antenna 320 is arranged opposite an internal surface of the sidewall of the storing container 300, substantially in alignment with the antenna pattern (not illustrated) of the sensor tag 310. The booster antenna 320 is adapted to receive and emit electromagnetic radiation of the sensor tag 310 for enhancing a reading range such that a reading device (not illustrated) outside of the storing container 300 is able to reliably communicate with the sensor tag 310 within the storing container 300. For example, the booster antenna may have a resonance frequency matching the resonance frequency of the antenna pattern (not illustrated) of the sensor tag 310.

Although the storing container 300 of Figure 8 is illustrated as a thermal insulation box, this does not pose any limitation to the present disclosure and the storing container 320 may be provided by any container having a closeable opening and a storing volume accessible via the closeable opening.

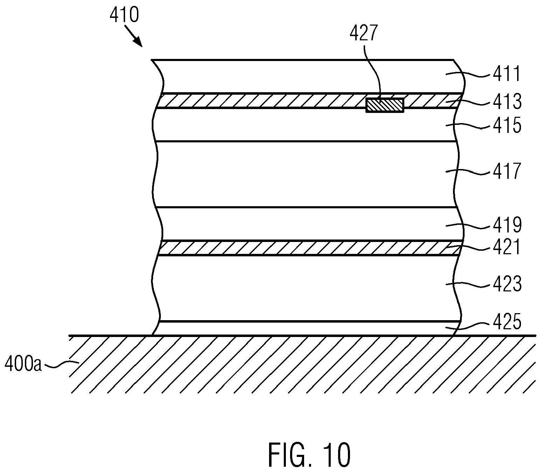

Referring now to Figure 10, illustrative embodiments of the present disclosure will be described in greater detail where a sensor tag 410 is attached to a metal material portion 400a of an item to be labelled. In illustrative examples herein, the metal material portion 400a may represent a wall portion of each of the storing containers 100, 200, and 300. For example, the metal material portion 400a may represent a wall portion of the lid element 100a or 200a or 300a or of the bottom element 100b or 200b or 300b. The sensor tag 410 may correspond to each of the sensor tags 1, 20, 40 as described above and only differ from these sensor tags by features as described below.

In the cross-sectional view of Figure 10, a sectional cross-section of a base substrate of the sensor tag 410 is illustrated, showing a multilayer configuration of the base substrate of the sensor tag 410. The multilayer configuration comprises an artwork layer 411, adhesive layer 413, a top conductor layer 415, a substrate layer 417, a bottom conductor layer 419, an adhesive layer 421, a ferrite layer 423, and an adhesive layer 425. The adhesive layer 413 attaches the artwork layer 411 to the substrate layer 417 over the top conductor layer 415, while the adhesive layer 421 attaches the ferrite layer 423 to the substrate layer 417 below the bottom conductor layer 419. The sensor tag 410 is attached to the metal material portion 400a. A sensor device 427 is coupled to the top conductor layer 415.

In some illustrative embodiments, the ferrite layer 423 is a layer comprising a ferrite material, such as a layer formed of a plastic-bonded ferrite. The ferrite layer 423 may at least partially cover the adhesive layer 421 such that the ferrite layer 423 is only arranged below the sensor device 427. This does not impose any limitation onto the present disclosure and the ferrite layer 423 may only be located between the metal material portion 400a and an antenna pattern (not illustrated) of the sensor tag 410.

Although various illustrative embodiments are described with respect to the Figures as sensor tags having a flexible base substrate, this does not impose any limitation onto the present disclosure and a rigid base substrate or a flex-rigid base substrate may be used instead. Even when including a bending line or folding line, a rigid base substrate or a flex-rigid base substrate may be prepared for allowing at least one bending or folding without breaking the substrate or the base substrate may be composed of rigid substrate portions connected at bending lines or folding lines via a flexible material mechanically interconnecting adjacent rigid substrate portions.

## Claims

1. A sensor tag, comprising:
a flexible base substrate;
an antenna pattern formed on a first side of the flexible base substrate; and
a sensor device arranged on a second side of the flexible base substrate, the sensor device being configured to sense at least one physical quantity, wherein the antenna pattern and the sensor device are electrically connected.

2. The sensor tag of claim 1, wherein the flexible base substrate has at least one bending line formed in a first portion of the flexible base substrate extending completely between a second portion of the flexible base substrate in which the antenna pattern is completely formed and a third portion of the flexible base substrate in which the sensor device is completely arranged.

3. The sensor tag of claim 2, wherein conductive track lines routed in the first portion have bending material portions provided at least at the at least one bending line, the bending material portions having a higher elasticity than the antenna pattern.

4. The sensor tag of one of claims 1 to 3, wherein the first and second sides of the flexible base substrate identify the same side of the flexible base substrate and an adhesive film is provided on at least a portion of a third side opposite the first side.

5. The sensor tag of one of claims 1 to 3, wherein the first and second sides of the flexible base substrate identify opposite sides of the flexible base substrate and the flexible base substrate further comprises via connections extending through the flexible base substrate between the first and second sides.

6. The sensor tag of one of claims 1 to 5, wherein the sensor device comprises a chip module, the chip module being configured to sense temperature.

7. The sensor tag of claim 6, wherein the sensor device further comprises at least one additional sensor element in electronic connection with the chip module.

8. The sensor tag of claim 7, wherein the at least one additional sensor element comprises at least one of a photodetector, an acceleration sensor, and a humidity sensor.

9. The sensor tag of one of claims 1 to 5, wherein the at least one physical quantity comprises at least one of temperature, humidity, light intensity, and acceleration.

10. The sensor tag of one of claims 6 to 8, further comprising a solar cell module in electric connection with the chip module.

11. The sensor tag of claim 10, wherein the solar cell module is configured to power the chip module with electrical power and/or the chip module is configured to at least one of generating an event signal, storing an event information, and outputting a notification signal to the antenna pattern on the basis of electrical power received from the solar cell module.

12. The sensor tag of claim 11, wherein the chip module is configured to activate a deactivation signal within the chip module for temporarily or permanently deactivating the chip module in response to electrical power received from the solar cell module.

13. The sensor tag of one of claims 1 to 12, wherein the flexible base substrate is provided in the shape of a strip substrate having a first end and a second end opposite the first end along a length direction of the strip substrate, wherein the antenna pattern is formed at the first end and the sensor device is formed at the second end.

14. A storing container, the storing container encasing a storing volume, wherein the storing volume is accessible via a closable opening, the storing container further comprising the sensor tag of one of claims 1 to 13 being arranged on the storing container such that at least the sensor device is exposed to the storing volume of the storing container.

15. The storing container of claim 14, wherein the sensor tag is arranged completely within the storing volume, wherein the storing container further comprises a booster antenna pattern arranged on an outer surface of a sidewall of the storing container opposite an internal surface of the sidewall of the storing container substantially in alignment with the antenna pattern of the sensor tag, the booster antenna being adapted to receive and emit electromagnetic radiation of the sensor tag at a resonance frequency of the booster antenna.

16. The storing container of claim 14, wherein the sensor tag is arranged on the storing container such that the antenna pattern of the sensor tag is exposed to an outer environment of the storing container.

17. The storing container of claim 16, wherein the sensor tag extends from outside of the storing container into the storing volume of the storing container through the closable opening.

18. The storing container of claim 14, wherein the sensor tag is arranged completely within the storing volume and the sensor tag further comprises a power source for supplying electric power to the sensor device.

19. The storing container of one of claims 14 to 18, wherein the storing container is a thermal insulation box, for example a thermal insulation box of Styrofoam or a container at least partially formed of a metal.

20. The storing container of claim 19, wherein the container walls enclosing the storing volume have a minimum thickness of 30 mm.

21. The storing container of claim 19 or 20, wherein the sensor tag comprises a ferrite material at least covering a surface portion of the flexible substrate at the antenna pattern.
